# EUROPEAN PATENT APPLICATION

(11) **EP 1 106 346 A2**
(43) Date of publication of application: **13.06.2001**
(21) Application number: 00310308.2
(22) Date of filing: 20.11.2000
(51) Int. Cl.: B32B 33/00, B32B 27/04, B32B 18/00

(54) **Refractory composite body and method of manufacture**

(30) Priority: 02.12.1999 GB 9928352
(71) Applicant: Microtherm International Limited, Upton, Wirral CH49 1SX (GB)
(72) Inventor: Carr, Geoffrey John Richard, Wallasey CH45 7QN (GB); Matthews, Anthony Michael, Kidderminster, Worcestershire WR9 2YT (GB)
(74) Representative: Jackson, Derek Charles

(57) **Abstract**

A composite body is made by a method in which a first body (1) of thermal insulation material and a second body (5) of substantially rigid refractory material are secured together, for example with an adhesive (3).

## Description

This invention relates to a composite body and to a method of manufacturing such a composite body.

There is known from EP-A-0 310 354 a composite material comprising a reinforcing material impregnated with a silicate matrix which is formed from a pre-gelled intimate mixture of a water soluble alkali silicate or alkyl silicate and a hardener, together with a minor amount of synthetic resin latex or emulsified silicon if desired. Such a material is said to be able to withstand relatively high impacts, to be waterproof, to be fireproof and not to give off toxic smoke or gas in the event of a fire. The reinforcing material may be glass fibre, preferably a knitted (not crimped) glass fibre, carbon cloth or metal webbing.

Such a composite material is said to be useable in various fields ranging from ballistics, car body parts, and building boards to use as insulating boards in soundproofing materials, heat-resistant and water-resistant materials. However, the disadvantage of such a composite material is that it has a relatively high thermal conductivity.

There is known, for example from GB-A-2 264 296 a microporous thermal insulation material which has a particularly low thermal conductivity, but which has relatively low impact resistance and mechanical rigidity.

It is therefore an object of the present invention to provide a composite body having relatively high impact resistance and mechanical rigidity combined with relatively low thermal conductivity.

According to one aspect of the present invention there is provided a composite body comprising a first body of thermal insulation material and a second body of substantially rigid refractory material, the first and second bodies being secured together.

According to another aspect of the present invention there is provided a method of manufacturing a composite body comprising the steps of:
providing a first body of thermal insulation material;
providing a second body of substantially rigid refractory material; and
securing together the first and second bodies.

In addition to providing a rigid, impact resistant component the second body appears to assist in reducing the temperature to a level below that which would be expected, for example by re-distributing applied heat away from the point or region of application.

Although it is not intended that the present invention should be bound by any specific theory, it is believed that applied heat is transmitted through the second body (for example along a reinforcing material within a silicate matrix) away from the point or region of application, thus reducing the amount of heat transmitted through to the cold face of the second body and the interface thereof with the first body. The resulting hot-face temperature is generally about 40 to 50 K less than that which would be expected.

Ideally the second body of substantially rigid refractory material is thin relative to the first body of thermal insulation material.

A second body of substantially rigid material may be secured to one side of the first body of thermal insulation material or may be secured to both sides thereof. A further second body of substantially rigid refractory material may be provided secured to one side of a further first body of thermal insulation material, the other sides of the first bodies facing each other. An air gap may be provided between the facing other sides of the first bodies.

Alternatively, a third body of thermal insulation material in an impermeable envelope may be provided secured to the other side of the first body of thermal insulation material. The impermeable envelope may be evacuated.

As a further alternative, a second body of substantially rigid material may be secured to both sides of the first body of thermal insulation material.

The second body of substantially rigid refractory material may comprise a fire resistant material.

The second body of substantially rigid refractory material may comprise a reinforcing material impregnated with a silicate matrix which provides rigidity and which is formed from a pre-gelled intimate mixture of a water soluble alkali silicate or alkyl silicate (such as ethyl silicate) with a hardener therefor (such as aluminium triphosphate). Such a body possesses impact resistance as well as fireand water-resistance, is electrically non-conductive, and yet can be manipulated into various shapes before it hardens. For example, the second body can be formed into a gentle curve to conform to a corresponding shape of the first body.

The second body may be a laminate, formed by laying alternate layers of reinforcing material and pre-gelled mixture.

The reinforcing material may be, for example, glass fibre, preferably a knitted (not crimped) glass fibre, carbon cloth, metal webbing, synthetic resin latex or other suitable organic or inorganic material, either synthetic or natural.

The first and second bodies may be secured together in a number of ways such as by adhesive, by means of one or more fasteners passing through the first and second bodies, or by means of external clamping means.

Adhesives may include a pre-gelled intimate mixture of a water soluble alkali silicate or alkyl silicate and a hardener (such as aluminium triphosphate), or a polyurethane adhesive. The former adhesive is relatively rigid, while the latter is flexible.

Fasteners passing through the first and second bodies may include rivets, bolts and other metallic or non-metallic (such as plastics) through fasteners.

The first body of thermal insulation material may comprise a compacted particulate material. Suitable particulate materials include microporous materials such as certain silicas, expanded clays, insulating glass beads or microspheres, refractory fibres, vermiculite, perlite, fly-ash and the like, either alone or in combination. The thermal insulation material may be compacted into any desired shape, such as a gentle curve.

The term "microporous" is used herein to identify porous or cellular materials in which the ultimate size of cells or voids is less than the means free path of an air molecule at NTP, i.e. of the order of 100 nm or less. Such microporous materials include aerogel, which is a gel in which the liquid phase has been replaced by a gaseous phase in such a way as to avoid the shrinkage which would occur if the gel was dried directly from a liquid state. A substantially identical structure can be obtained by controlled precipitation from solution, the temperature and pH being controlled during precipitation to obtain an open lattice precipitate. Other equivalent open lattice structures include pyrogenic (fumed) and electro-thermal types in which a substantial proportion of the particles have an ultimate particle size less than 100 nm.

Any of these materials, based for example on silica, alumina, titania or other metal oxides, may be used to prepare a composition which is microporous as defined above.

The thermal insulation material may include an infra-red opacifier which scatters or absorbs infra-red radiation. The opacifier may be selected from titanium dioxide, iron oxide, zirconium oxide, zirconium silicate, chromium oxide, silicon carbide and mixtures thereof.

The thermal insulation material may include reinforcing filaments. The reinforcing filaments may be of any suitable stable material such as silica, quartz, glass fibres, ceramic fibre materials, body-fluid-soluble fibres and mixtures thereof. The glass fibres may be selected from E glass, S glass, R glass, ECR glass, C glass and A glass.

Additionally or alternatively, the thermal insulation material may be compacted into a reinforcing honeycomb matrix.

The surface of the thermal insulation material may be bare or the thermal insulation material may be encapsulated in a protective envelope, for example of glass cloth, paper or plastics material.

The thermal insulation material may be at ambient pressure or may be at a pressure below or above ambient pressure.

Thus the present invention provides a composite body which demonstrates an unexpectedly low thermal conductivity and which can be manufactured in board or moulded forms and which can be fire and water resistant in addition to being capable of withstanding relatively high impact forces.

Composite bodies according to the present invention can be used in a wide range of applications. For example, they can be used as decorative or structural wall panels for building and transport applications.

For a better understanding of the present invention and to show more clearly how it may be carried into effect reference will now be made, by way of example, to the accompanying drawings in which:
Figure 1 is a diagrammatic cross-sectional view of a first embodiment of a composite panel according to the present invention;
Figure 2 is a diagrammatic cross-sectional view of a second embodiment of a composite panel according to the present invention;
Figure 3 is a diagrammatic cross-sectional view of a third embodiment of a composite panel according to the present invention;
Figure 4 is a diagrammatic cross-sectional view of a fourth embodiment of a composite panel according to the present invention;
Figure 5 is a diagrammatic cross-sectional view of a fifth embodiment of a composite panel according to the present invention; and
Figure 6 is a diagrammatic cross-sectional view of a sixth embodiment of a composite panel according to the present invention.

The invention will further be explained with reference to the following Examples:

### EXAMPLE 1

In a first stage a panel of microporous thermal insulation material was prepared by intimately mixing together a dry mixture of 58.2 percent by weight of microporous pyrogenic silica available from Degussa-Huls under the Trade Mark AEROSIL 200, the silica having a nominal specific surface area of 200 m²/g as measured by the B.E.T. method, 38.8 percent by weight of a particulate opacifier in the form of titanium dioxide, and 3 percent by weight of aluminosilicate filaments available from Owens Corning Fiberglas under the Trade Mark ADVANTEX. The microporous thermal insulation mixture was encapsulated into an envelope of close-weave glass cloth and compressed to form a semi-rigid panel having a thickness of 9 mm and a density of 240 kg/m³.

It should be noted the semi-rigid panel may have other dimensions and densities. For example, the thickness of the panel may be in the range from 5 mm to 15 mm and the density may be in the range from 150 to 350 kg/m³.

Using a sodium silicate adhesive, a composite panel was formed in a second stage by adhering the thermally insulating panel to a substantially rigid board of refractory reinforcing material in the form of glass fibres impregnated with a silicate matrix which provides rigidity and which is formed from a pre-gelled intimate mixture of a soluble alkali silicate or alkyl silicate together with a hardener. The substantially rigid refractory board had a thickness of about 2 mm and a density of about 1136 kg/m³.

It should be noted the substantially rigid refractory board of reinforcing material may have other dimensions and densities. For example, the thickness may be in the range from 1.5 to 3 mm and the density may be in the range from 1050 to 1150 kg/m³.

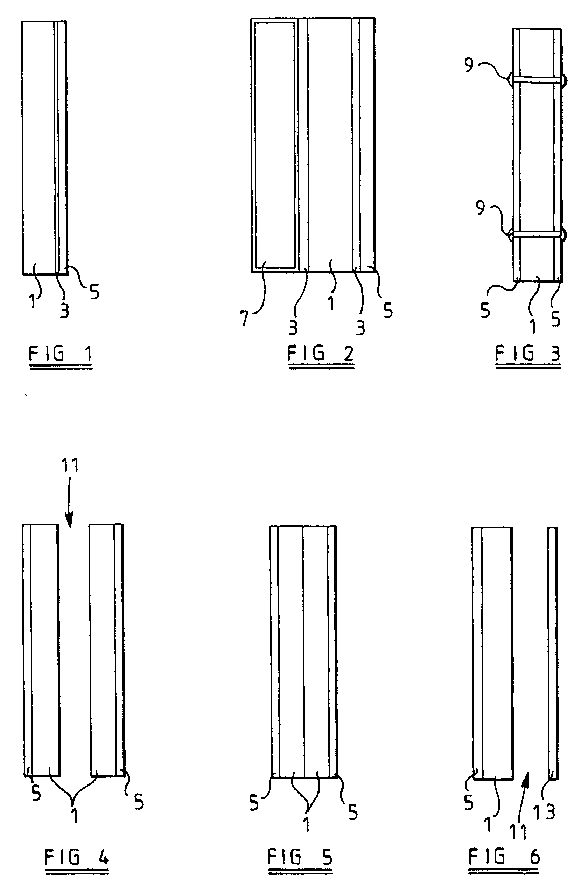

Figure 1 shows a composite panel comprising a thermally insulating panel 1 secured, as by adhesive 3, to a substantially rigid refractory board 5 of reinforcing material. However, it should be noted that other securing means, such as rivets, may be used.

### EXAMPLE 2

In a first stage a semi-rigid panel of microporous thermal insulation material was formed in the manner described above under Example 1.

In a second stage a further panel of microporous thermal insulation material was prepared by encapsulating dry particulate pyrogenic silica available from Degussa-Huls under the Trade Mark SIPERNAT 500, into an envelope of spun bonded polyester material. The silica had a nominal specific surface area of 450 m²/g as measured by the B.E.T. method.

In a third stage, the spun polyester envelope was then encapsulated in a multi-layer foil and film envelope and evacuated of air.

In a fourth stage, using a sodium silicate adhesive and a substantially rigid refractory board as described above in Example 1 the evacuated panel was adhered to one side of the semi-rigid panel and the rigid refractory board was adhered to the other side of the semi-rigid panel.

Figure 2 shows a composite panel comprising a thermally insulating panel 1 secured, as by adhesive 3, at one side to an encapsulated thermally insulating panel 7 and secured, again as by adhesive 3, at the other side to a substantially rigid refractory board 5 of reinforcing material.

### EXAMPLE 3

In a first stage a block of thermally insulating sodium silicate bound vermiculite was made by mixing together and forming into a block 81 percent by weight of exfoliated vermiculite, available from Hoben International Limited under the reference MICRON GRADE, and 19 percent by weight of potassium silicate, available from the Crosfield Group under the Trade Mark PYRAMID K66. The block was hardened by curing at 523 K for 25 minutes.

In a second stage the cured thermal insulation block was riveted between two substantially rigid refractory boards as described above in Example 1.

Figure 3 shows a composite panel comprising a thermally insulating panel 1 secured between two substantially rigid boards 5 of refractory reinforcing material by means of rivets 9.

### EXAMPLE 4

A semi-rigid panel of microporous thermal insulation material was formed in the manner described above under Example 1, the panel having a thickness of 11 mm and a density of 160 kg/m³.

Using a sodium silicate adhesive and two substantially rigid refractory boards as described above in Example 1, the substantially rigid boards were adhered to each side of the semi-rigid panel.

By way of example, the substantially rigid refractory boards were found to have a thermal conductivity at a mean temperature of 50 degrees Celsius of 0.1310 W/mK and a conductivity of 0.1718 W/mK at a mean temperature of 100 degrees Celsius. This figure can be extrapolated to a conductivity of 0.2534 W/mK at a mean temperature of 200 degrees Celsius, but at such high thermal conductivities it is difficult to determine the conductivity experimentally.

By way of comparison, the thermally insulating panel was found to have a thermal conductivity of 0.031 W/mK at a mean temperature of 200 degrees Celsius.

The composite panel was found to have a thermal conductivity of 0.0377 W/mK at a mean temperature of 200 degrees Celsius which is surprisingly close to the thermal conductivity of the semi-rigid panel.

The composite panel shown in Figure 4 is effectively a combination of two composite panels described above in relation to Figure 1 arranged back-to-back with the two semi-rigid panels 1 of thermal insulation material facing each other and the two sheets 5 of substantially rigid refractory reinforcing material providing the external faces, there being an air gap 11 between the two panels 5. By way of example, the sheets 5 may have a thickness of about 2 mm, the panels may have a thickness of 6 to 8 mm and the air gap may be in the range of 58 to 54 mm to provide a composite panel having a combined thickness of about 74 mm. However, it should be noted alternative thicknesses may be used.

The composite panel shown in Figure 5 is similar to that of Figure 4 except there is no air gap between the two panels 1, the panels 1 being in contact with each other. In such a case, for example the sheets 5 may have a thickness of about 2 mm and the panels may have a thickness of 8 to 10 mm to provide a composite panel having an overall thickness of about 20 to 24 mm. However, it should be noted alternative thicknesses may be used.

The composite panel shown in Figure 6 is similar to that shown in Figure 1 except that an air gap 11 is provided between the panel 5 and a bulkhead 13 which may be, for example, of aluminium. In such a case, for example, the sheet 5 may have a thickness of about 2 mm, the panel may have a thickness of 11.5 to 12.5 mm and the air gap may be about 100 mm.

## Claims

1. A composite body comprising a first body (1) of thermal insulation material and a second body (5) of substantially rigid refractory material, the first and second bodies being secured together.

2. A composite body as claimed in claim 1, characterised in that the second body (5) of substantially rigid refractory material is secured to one side of the first body (1) of thermal insulation material.

3. A composite body as claimed in claim 2, characterised in that a further second body (5) of substantially rigid refractory material is provided secured to one side of a further first body (1) of thermal insulation material, the other sides of the first bodies facing each other, an air gap (11) optionally being provided between the facing other sides of the first bodies.

4. A composite body as claimed in claim 2, characterised in that a third body (7) of thermal insulation material in an impermeable envelope, for example an evacuated envelope, is provided secured to the other side of the first body (1) of thermal insulation material.

5. A composite body as claimed in claim 1, characterised in that the second body (5) of substantially rigid refractory material is secured to both sides of the first body (1) of thermal insulation material.

6. A composite body as claimed in any preceding claim, characterised in that the second body (5) of substantially rigid refractory material comprises a fire resistant material.

7. A composite body as claimed in any preceding claim, characterised in that the second body (5) of substantially rigid refractory material comprises a reinforcing material impregnated with a silicate matrix which provides rigidity and which is formed from a pre-gelled intimate mixture selected from a water soluble alkali silicate and alkyl silicate, such as ethyl silicate, together with a hardener therefor, such as aluminium triphosphate.

8. A composite body as claimed in claim 7, characterised in that the second body (5) comprises a laminate, for example formed of alternate layers of reinforcing material and pre-gelled mixture.

9. A composite body as claimed in claim 8, characterised in that the reinforcing material is selected from glass fibre, knitted glass fibre, carbon cloth, metal webbing, synthetic resin latex and other suitable organic and inorganic material.

10. A composite body as claimed in any preceding claim, characterised in that the first and second bodies (1, 5) are secured together by means selected from adhesive (3), at least one fastener (9) passing through the first and second bodies, and external clamping means.

11. A composite body as claimed in claim 10, characterised in that the adhesive (3) is selected from a pre-gelled intimate mixture of a water soluble alkali silicate and a hardener, a pre-gelled intimate mixture of a water soluble alkyl silicate and a hardener, and a polyurethane adhesive.

12. A composite body as claimed in any preceding claim, characterised in that the first body (1) of thermal insulation material comprises a compacted particulate material, for example selected from microporous materials, expanded clays, insulating glass beads, insulating glass microspheres, refractory fibres, vermiculite, perlite and fly-ash and mixtures thereof.

13. A composite body as claimed in any preceding claim, characterised in that the thermal insulation material of the first body (1) is encapsulated in a protective envelope.

14. A method of manufacturing a composite body comprising the steps of:
providing a first body (1) of thermal insulation material;
providing a second body (5) of substantially rigid refractory material; and
securing together the first and second bodies.

15. A method according to claim 14, characterised in that the second body (5) of substantially rigid refractory material is secured to one side of the first body (1) of thermal insulation material.

16. A method according to claim 15 and including the step of securing a further second body (5) of substantially rigid refractory material to one side of a further first body (1) of thermal insulation material, the other sides of the first bodies facing each other, an air gap (11) optionally being provided between the facing other sides of the first bodies.

17. A method according to claim 15 and including the step of providing a third body (7) of thermal insulation material in an impermeable envelope, for example an evacuated envelope, secured to the other side of the first body (1) of thermal insulation material.

18. A method according to claim 14, characterised in that the second body (5) of substantially rigid refractory material is secured to both sides of the first body (1) of thermal insulation material.

19. A method according to any one of claims 14 to 18, characterised in that the second body (5) of substantially rigid refractory material comprises a fire resistant material.

20. A method according to any one of claims 14 to 19, characterised in that the second body (5) of substantially rigid refractory material comprises a reinforcing material impregnated with a silicate matrix which provides rigidity and which is formed from a pre-gelled intimate mixture selected from a water soluble alkali silicate and alkyl silicate, such as ethyl silicate, together with a hardener therefor, such as aluminium triphosphate.

21. A method according to claim 20, characterised in that the second body (5) comprises a laminate, for example formed of alternate layers of reinforcing material and pre-gelled mixture.

22. A method according to claim 21, characterised in that the reinforcing material is selected from glass fibre, knitted glass fibre, carbon cloth, metal webbing, synthetic resin latex and other suitable organic and inorganic material.

23. A method according to any one of claims 14 to 22, characterised in that the first and second bodies (1, 5) are secured together by means selected from adhesive (3), at least one fastener (9) passing through the first and second bodies, and external clamping means.

24. A method according to claim 23, characterised in that the adhesive is selected from a pre-gelled intimate mixture of a water soluble alkali silicate and a hardener, a pre-gelled intimate mixture of a water soluble alkyl silicate and a hardener, and a polyurethane adhesive.

25. A method according to any one of claims 14 to 24, characterised in that the first body (1) of thermal insulation material comprises a compacted particulate material, for example selected from microporous materials, expanded clays, insulating glass beads, insulating glass microspheres, refractory fibres, vermiculite, perlite and fly-ash and mixtures thereof.

26. A method according to any one of claims 14 to 25, characterised in that the thermal insulation material of the first body (1) is encapsulated in a protective envelope.
